# EUROPÄISCHE PATENTSCHRIFT

(11) **EP 2 786 940 B1**
(45) Veröffentlichungstag und Bekanntmachung des Hinweises auf die Patenterteilung: **13.07.2016**
(21) Anmeldenummer: 14161027.9
(22) Anmeldetag: 21.03.2014
(51) Int. Cl.: B65B 25/20, B65G 19/02, B65G 9/00

(54) **Beladestation für Transporttaschen zum hängenden Transport von Waren**
Loading station for transport bags for the suspended transport of goods
Station de chargement pour sacs de transport pour le transport suspendu de marchandises

(30) Priorität: 22.03.2013 DE 102013205170
(43) Veröffentlichungstag der Anmeldung: 08.10.2014
(73) Patentinhaber: Dürkopp Fördertechnik GmbH, 33719 Bielefeld (DE)
(72) Erfinder: Janzen, Paul, 33619 Bielefeld (DE)
(74) Vertreter: Rau, Schneck & Hübner Patentanwälte Rechtsanwälte PartGmbB

(56) Entgegenhaltungen:
- EP-A1- 1 420 105
- EP-A1- 2 130 968
- EP-A2- 2 196 415
- DE-A1-102011 101 987

## Beschreibung

Die Erfindung betrifft eine Beladestation für Transporttaschen. Ferner betrifft die Erfindung eine Förderanlage mit mindestens einer derartigen Beladestation.

Eine Beladestation für Transporttaschen zum hängenden Transport von Waren ist beispielsweise bekannt aus der EP 2 196 415 B1 und aus der EP 2 130 968 A1.

Die DE 10 2011 101 987 A1 offenbart eine gattungsgemäße Förderanlage mit einer Beladestation, bei der eine Transporttasche auf einer Ladefläche zum Beladen abgestellt wird.

Es ist eine Aufgabe der vorliegenden Erfindung, eine Beladestation zum einfachen Beladen insbesondere von Transporttaschen anzugeben, die für einen warenschonenden Transport optimiert sind.

Diese Aufgabe ist erfindungsgemäß gelöst durch eine Beladestation mit den im Anspruch 1 angegebenen Merkmalen.

Erfindungsgemäß wurde erkannt, dass ein warenschonendes Beladen dann gegeben ist, wenn die Transporttaschen in einer liegenden Anordnung beladen werden. Die Waren können dann auf die liegende Tragwand aufgelegt und anschließend können die Transporttaschen verschlossen werden. Die Gefahr eines unerwünschten Verrutschens der Ware und insbesondere eines unerwünschten Knitterns empfindlicher Waren wie beispielsweise Bekleidungswaren ist vermieden. Bei dem Fördertrum kann es sich um eine Förderschiene und/oder um eine Förderkette handeln.

Ein Beladetisch nach Anspruch 2 ermöglicht ein bequemes Beladen der geöffneten Transporttaschen.

Eine Durchgangsöffnung, insbesondere eine Nut, nach Anspruch 3 gewährleistet eine Transportverbindung der Transporttaschen mit dem Fördertrum auch im Beladeabschnitt, sodass die Transporttaschen auch hier automatisch weitergefördert werden können. Durch die Durchgangsöffnung können die Tragelemente zudem beim Transport der Transporttaschen durch den Beladeabschnitt versenkt werden, sodass sie beim Beladen nicht stören.

Alternativ zu automatischen Öffnungs- und Schließmitteln nach den Ansprüchen 4 und 5 kann auch ein manuelles Öffnen und/oder ein manuelles Schließen der Transporttaschen beim Eintritt in den bzw. beim Austritt aus dem Beladeabschnitt erfolgen.

Die Vorteile einer Förderanlage nach Anspruch 6 entsprechen denen, die vorstehend unter Bezugnahme auf die Beladestation bereits erläutert wurden. In der Entladestation kann ein automatisches Öffnen der Transporttaschen erfolgen. Die Entladestation kann hierzu ein Betätigungselement aufweisen, welches mit einer Kupplung zum lösbaren Verbinden der Taschenwände zusammenwirkt. Das Betätigungselement kann als Schaltkufe ausgebildet sein. Die Förderanlage kann einen Förderantrieb aufweisen.

Ausführungsbeispiele der Erfindung werden nachfolgend anhand der Zeichnungen erläutert. In dieser zeigen:
- Fig. 1: perspektivisch eine erste Ausführung eine Transporttasche zum hängenden Transport von Waren, wobei eine Kupplung zum lösbaren Verbinden einer Tragwand der Transporttasche mit einer bahnförmigen Waren-Haltewand der Transporttasche in einer Freigabestellung dargestellt ist;
- Fig. 2: die Transporttasche nach Fig. 1 mit der Kupplung in einer Sperrstellung, in der die Haltewand mit der Tragwand im Kupplungsbereich fest verbunden ist;
- Fig. 3: in einer zur Fig. 2 ähnlichen Darstellung die Transporttasche, bei der die Haltewand zum Transport einer kastenförmigen Ware längs ihrer Bahnform verlängert und damit ausgebaucht ist;
- Fig. 4: eine weitere Ausführung einer Transporttasche zum hängenden Transport von Waren, gezeigt in einer Schwenkposition einer Vorratsrolle für eine flexible Waren-Haltewand nahe einer Kupplungs-Endstellung, in der die Waren-Haltewand mit einer steifen Tragwand der Transporttasche verbindbar ist, wobei die Kupplung nahe einem oberen Taschenende, also nahe eines Tragelements zum hängenden Tragen der Transporttasche angeordnet ist;
- Fig. 5: in einer zu Fig. 4 ähnlichen Darstellung eine weitere Ausführung einer Transporttasche zum hängenden Transport von Waren, wobei bei dieser Ausführung eine Kupplung im Bereich eines dem Tragelement gegenüberliegenden Endes der Transporttasche angeordnet ist;
Fig. 6 perspektivisch eine Beladestation zum Beladen der Transporttaschen mit Waren, dargestellt mit Transporttaschen der Ausführung nach Fig. 5;
Fig. 7 ebenfalls perspektivisch eine Abgabestation zum Ausladen der Waren aus Transporttaschen der Ausführung nach Fig. 5; und
Fig. 8 perspektivisch einen Ausschnitt der Abgabestation in einer Momentanposition einer der Transporttaschen vor dem Ausladen.

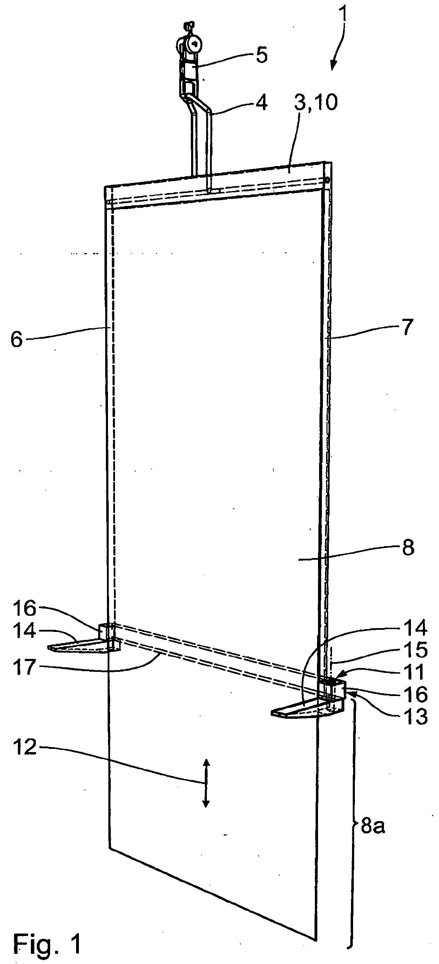

Anhand der Fig. 1 bis 3 wird eine erste Ausführung einer Transporttasche 1 zum hängenden Transport von Waren beschrieben. Bei den Waren kann es sich um Bekleidungsstücke, aber auch um andere und insbesondere feste Waren wie Bücher oder Pakete und insbesondere auch um kleinteilige Waren handeln.

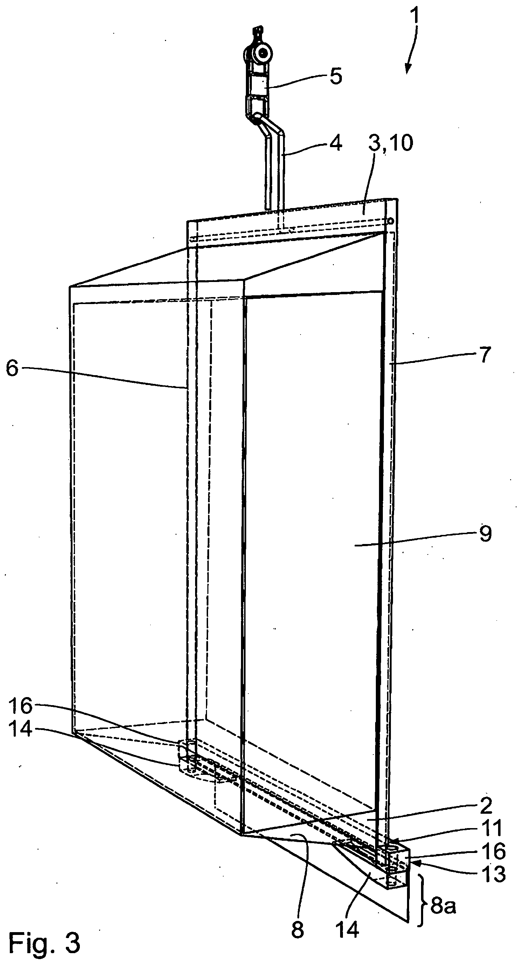

Die Transporttasche 1 hat eine steife Tragwand 2 (vgl. Fig. 3). Die steife Tragwand 2 ist in ihrem in Transportstellung oberen Abschnitt 3 mit einem Tragelement 4 zum hängenden Tragen der Transporttasche 1 verbunden. Bei der Ausführung nach Fig. 1 handelt es sich beim Tragelement 4 um einen Tragbügel, der in einem aus dem Stand der Technik bekannten Rollenadapter 5 eingreift, sodass die Transporttasche 1 über ein ebenfalls aus dem Stand der Technik bekanntes Führungsschienensystem einer Förderanlage geführt werden kann.

In der Transportstellung in den beiden seitlichen Randbereichen hat die Tragwand 2 zwei überstehende Bordwandabschnitte 6, 7.

Die Transporttasche 1 hat weiterhin eine flexible, bahnförmige Waren-Haltewand 8. Diese bildet mit der Tragwand 2 eine in der Transportstellung der Transporttasche 1 nach unten und zu zwei gegenüber liegenden Seiten hin geschlossene Tasche. Zu den beiden anderen Seiten hin kann diese Tasche offen sein, wie das Tragbeispiel nach Fig. 3 zeigt, in der die Transporttaschen 1 ein Paket 9 trägt. Die Transporttasche 1 ist in der dargestellten Transportstellung zu den zwei gegenüber liegenden Seiten, nämlich einerseits zur Tragwand 2 und andererseits zur Waren-Haltewand 8 hin geschlossen und zu den anderen beiden Seiten hin offen. Die überstehenden Bordwandabschnitte 6, 7 sichern das Paket 9 gegen ein Verrutschen seitlich über die Bordwandabschnitte 6, 7 hinaus.

Die flexible Waren-Haltewand 8 ist aus einem nicht elastischen Material gefertigt, beispielsweise aus einem PE-Material mit einer PVC-Beschichtung.

Die Tragwand 2 ist mit der Haltewand 8 zwischen einem in der Transportstellung oberen Wand-Verbindungsabschnitt 10 und einem in der Transportstellung unteren Wand-Verbindungsabschnitt 11 derart verbunden, dass eine Länge der bahnförmigen Haltewand 8 in einer Bahnrichtung zwischen den beiden Wand-Verbindungsabschnitten 10, 11 an den Transport verschiedener Waren angepasst werden kann.

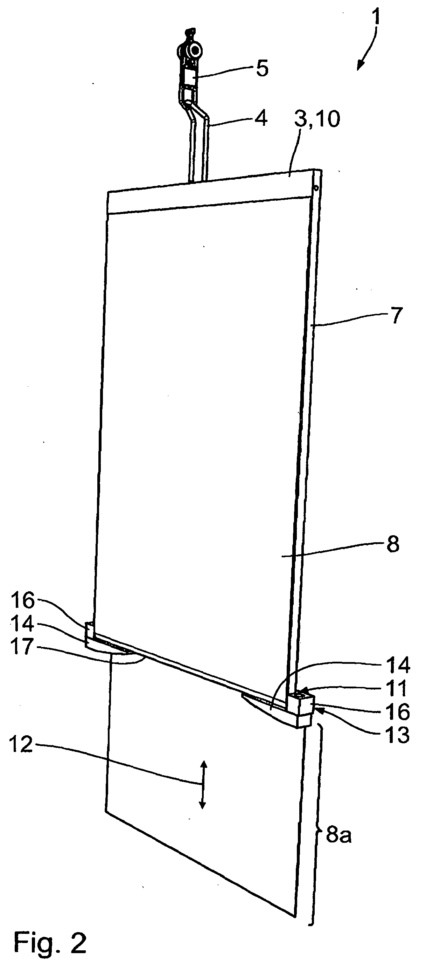

Die Fig. 1 und 2 zeigen dabei die Haltewand 8 in einer Grundstellung relativ zur Tragwand 2, bei die Haltewand 8 insgesamt flächig an der Tragwand 2 anliegt. In dieser Grundstellung steht ein Bahnabschnitt 8a der flexiblen Waren-Haltewand 8 über den unteren Wand-Verbindungsabschnitt 11 über.

Die Fig. 3 zeigt die Haltewand 8 mit der zwischen den beiden Wand-Verbindungsabschnitten 10, 11 zum Transport des Pakets 9 in ihrer Länge angepassten Haltewand 8. Der Überstand 8a der Haltewand 8 ist entsprechend verringert.

Eine Längenanpassung der Haltewand 8 erfolgt durch eine Relativverlagerung der Haltewand 8 längs der Bahnrichtung 12 zur Tragwand 2 im Bereich des unteren Verbindungsabschnitts 11.

Zur lösbaren Verbindung der Haltewand 8 mit der Tragwand 2 im unteren Wand-Verbindungsabschnitt 11 und insbesondere zur Fixierung der Längeneinstellung der Haltewand 8 im unteren Wand-Verbindungsabschnitt 11 dient eine Kupplung 13. Die Kupplung 13 ist im Bereich des unteren Wand-Verbindungsabschnitts 11 angeordnet. Die Kupplung 13 ist in der Fig. 1 in einer Freigabestellung gezeigt, in der eine Verlagerung der Haltewand 8 zur Tragwand 2 längs der Bahnrichtung 12 möglich ist, und in der Fig. 2 in einer Sperrstellung gezeigt, in der die Haltewand 8 relativ zur Tragwand 2 gegen eine Verlagerung längs der Bahnrichtung 12 fixiert ist und in der gleichzeitig die Tasche im unteren Wand-Verbindungsabschnitt 11 verschlossen ist.

Die Kupplung 13 hat zwei Klemmhebel 14, die jeweils um eine außenliegende, in der Transportstellung der Transporttasche 1 vertikale Schwenkachse 15 verlagerbar sind. Die Schwenkbewegung der Klemmhebel 14 erfolgt geführt jeweils über ein Schwenklagerteil 16 der Kupplung 13, welches außen an den Bordwandabschnitten 6, 7 der Tragwand 2 festgelegt ist. In der Freigabestellung nach Fig. 1 sind die beiden Klemmhebel 14 so verlagert, dass sie außer Eingriff mit der flexiblen Waren-Haltewand 8 stehen. In der Sperrstellung nach Fig. 2 sind die beiden Klemmhebel 14 jeweils um 90° um die zugehörige Schwenkachse 15 nach innen verschwenkt, sodass sie einen Abschnitt der Haltewand 8 gegen eine untere Rahmenleiste 17 der Tragwand 2 im unteren Wand-Verbindungsabschnitt 11 klemmen. Zwischen der Freigabestellung nach Fig. 1 und der Sperrstellung nach Fig. 2 können die beiden Klemmhebel manuell verschwenkt werden.

Beim Beladen wird die Ware zwischen die beiden Taschenwände 2, 8 eingebracht. Die flexible Waren-Haltewand 8 wird dabei längs der Bahnrichtung 12 so lange relativ zur Tragwand 2 verlagert, bis in der gebildeten Tasche ausreichend Platz für die Ware, beispielsweise für das Paket 9, vorliegt. Anschließend wird die flexible Waren-Haltewand 8 längs der Bahnrichtung 12 fest angezogen, bis die Ware in der Tasche fixiert ist und schließlich durch Verlagern der beiden Klemmhebel 14 von der Freigabein die Sperrstellung relativ zur Tragwand 2 fixiert ist. Die Tasche ist dann beladen und für den Transport der hierin fixierten Ware vorbereitet. Zur Warenabgabe werden die beiden Klemmhebel 14 gelöst und die flexible Waren-Haltewand kann durch Ziehen längs der Bahnrichtung 12 gelockert werden. Die Ware kann dann aus der Tasche entnommen werden.

Die flexible und längenanpassbare Haltewand weist ein Haltewand-Reservoir auf. Das Haltewand-Reservoir umfasst einen nicht erforderlichen Abschnitt der Haltewand. Der nicht erforderliche Abschnitt der Haltewand ist maximal, wenn die Tasche unbeladen ist, also keine Ware in der Transporttasche transportiert wird. Der nicht benötigte Haltewand-Abschnitt liegt auch dann vor, wenn eine Ware transportiert wird, deren Größe nicht die vollständige Haltewandgröße erfordert. Bei der Transporttasche wird lediglich der Anteil der Haltewand aus dem Haltewand-Reservoir zum Tragen und/oder Fixieren einer Ware verwendet, der aufgrund der Warengröße erforderlich ist. Der nicht erforderliche Anteil verbleibt in dem Haltewand-Reservoir. Eine Länge der bahnförmigen Haltewand zwischen dem oberen und dem unteren Wand-Verbindungsabschnitt ist variabel an den Transport verschiedener Waren anpassbar. Insbesondere bei dem Transport kleinerer Waren wird nur die Länge der bahnförmigen Haltewand dem Haltewand-Reservoir entnommen, die für den Transport der Ware erforderlich ist. Dadurch ist die Ware in der Transporttasche definiert und gesichert angeordnet. Ein unbeabsichtigtes und unkontrolliertes Verlagern der Ware in der Transporttasche ist ausgeschlossen. Der Transport mit der erfindungsgemäßen Transporttasche ist zuverlässig und sicher. Das Haltewand-Reservoir kann beispielsweise als Überstands-Abschnitt oder als Vorratsrolle ausgeführt sein. Das Entnehmen der Haltewand aus dem Haltewand-Reservoir ist insbesondere reversibel möglich. Das bedeutet, dass nach einem erfolgten Warentransport die nicht erforderliche Länge der Haltewand zurück in das Haltewand-Reservoir verlagert werden kann. Dadurch ist gewährleistet, dass eine vergleichsweise kleinere Ware zuverlässig transportiert werden kann, nachdem zuvor eine vergleichsweise größere mit der Transporttasche transportiert worden ist.

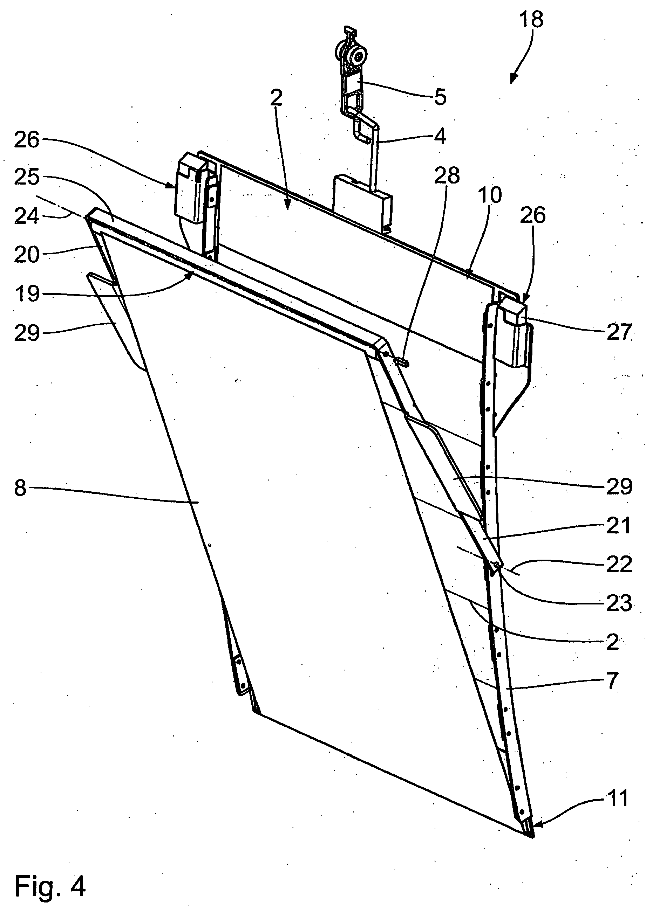

Anhand der Fig. 4 wird nachfolgend eine weitere Ausführung einer Transporttasche 18 zum hängenden Transport von Waren beschrieben. Komponenten und Funktionen, die denjenigen entsprechen, die vorstehend unter Bezugnahme auf die Fig. 1 bis 3 bereits erläutert wurden, tragen die gleichen Bezugsziffern und werden nicht nochmals im Einzelnen diskutiert.

Die Tragwand 2 hat einen Grundkörper aus einem steifen Material, der einteilig oder mehrteilig ausgeführt sein kann. Beim Material des Grundkörpers kann es sich um Kunststoff oder um Metall handeln. Die Tragwand 2 ist zur Warenauflage mit einer Anti-Rutsch-Beschichtung versehen. Diese Beschichtung kann PU und/oder Kautschuk beinhalten.

Bei der Transporttasche 18 ist die Tragwand 2 zur Tasche hin, also zur flexiblen Waren-Haltewand 8 hin, konvex gekrümmt. Ein Krümmungsradius der Tragwand 2 liegt im Bereich zwischen 1m und 3m. Alternativ zu einer konvex gekrümmten Gestaltung der Tragwand 2 kann eine konvexe Ausführung der Tragwand 2 auch dadurch erreicht werden, dass diese aus einer Mehrzahl eben verlaufender Tragwand-Abschnitte zwischen dem oberen Wand-Verbindungsabschnitt 10 und dem unteren Wand-Verbindungsabschnitt 11 zusammengefügt ist, wobei jeweils zwei benachbarte der Tragwand-Abschnitte einen kleinen Winkel zueinander einnehmen, sodass ein Schnitt durch die Tragwand senkrecht zum Verlauf der beiden Verbindungsabschnitte 10, 11 polygonförmig ist. Die Tragwand 2 kann dabei aus beispielsweise fünf bis zwanzig derartiger Polygon-Tragwand-Abschnitte zusammengesetzt sein.

Bei der Transporttasche 18 liegt die flexible Waren-Haltewand 8 abschnittsweise auf einer Vorratsrolle 19 aufgerollt vor. Auf der Vorratsrolle 19 aufgerollt ist dabei je nach Stellung der Vorratsrolle 19 die gesamte Waren-Haltewand oder aber auch nur derjenige Abschnitt der Waren-Haltewand 8, der bei der Ausführung nach den Fig. 1 bis 3 im Bereich des Überstandes 8a vorliegt.

Die Vorratsrolle 19 ist als Federwelle ausgeführt, die die nicht aufgerollte Haltewand 8 zwischen der Vorratsrolle 19 und dem unteren Wand-Verbindungsabschnitt 11 unter Spannung hält. Die Haltewand 8 kann automatisch variabel an die Größe verschiedener Waren angepasst werden.

Dadurch ist gewährleistet, dass sich die flexible Haltewand 8 automatisch variabel an verschiedene Warengrößen anpasst. Insbesondere ist ein manuelles Eingreifen beispielsweise eines Bedieners nicht erforderlich, um die Haltewand 8 variabel festzulegen, falls verschiedene Warengrößen mit der Transporttasche 18 transportiert werden sollen.

Die Transporttasche 18 hat zwei schwenkbare Bügel 20, 21. Die Bügel 20, 21 sind jeweils um eine in der Transportstellung der Transporttasche 18 horizontal in der Ebene der Tragwand 2 verlaufende Schwenkachse 22 um ein Schwenkgelenk 23 verschwenkbar. Die Schwenkachse 22 ist mittig zwischen dem oberen Wand-Verbindungsabschnitt 10 und dem unteren Wand-Verbindungsabschnitt 11 angeordnet. Die Schwenkgelenke 23 für die Bügel 20, 21 sind an den seitlichen Bordwandabschnitten 6, 7 der Tragwand 2 festgelegt. Die beiden Schwenkgelenke 23 liegen also zu beiden Seiten der bahnförmigen Haltewand 8.

Die dem Schwenkgelenk 23 jeweils gegenüberliegenden Enden der Bügel 20, 21 sind mit der Vorratsrolle 19 verbunden und nehmen diese drehbar um eine ebenfalls horizontale Rollenachse 24, die parallel zur Schwenkachse 22 verläuft, zwischen sich auf. Zur Stabilisierung ist zwischen den Bügeln 20, 21 noch eine Rahmenleiste 25 angeordnet, die benachbart zur Vorratsrolle 19 verläuft.

Anstelle der Kupplung 13 hat die Transporttasche 18 eine weitere Ausführung einer Kupplung 26 zum lösbaren Verbinden der Haltewand 8 mit der Tragwand 2, in diesem Fall im oberen Wand-Verbindungsabschnitt 10. Zur Kupplung 26 gehört ein Kupplungsteil in Form einer Sperrklinke 27, die im Bereich des oberen Wand-Verbindungsabschnitts 10 rahmenfest zur Tragwand 2 gelagert ist. Als Gegen-Kupplungsteil hat die Kupplung 26 jeweils einen Kupplungsstift 28, der außen am jeweiligen Bügel 20, 21 benachbart zur Rollenachse 24 angeordnet ist. Die Kupplung 26 weist zwei Paare aus einer Sperrklinke 27 und einem Kupplungsstift 28 auf, die jeweils beiderseits der Bordwandabschnitte 6, 7 angeordnet sind.

Die Kupplungsstifte 28 stellen Kupplungselemente der Kupplung 26 dar, die starr mit der Verbindungsrolle 19 verbunden sind.

Zum Beladen der Transporttasche 18 mit einer Ware oder einer Mehrzahl von Waren liegt die Vorratsrolle 19 zunächst in einer Offenstellung der Transporttasche 18 unmittelbar neben dem unteren Wand-Verbindungsabschnitt 11. In dieser Offenstellung ist die Vorratsrolle 19 aufgrund der Vorspannung der Federwelle gehalten. In der Offenstellung ist praktisch die gesamte Haltewand 8 auf die Vorratsrolle 19 aufgerollt. Zum Beladen liegt die Transporttasche 18 so, dass die Tragwand 2 mit ihrer konvexen Oberseite nach oben weist. Die Ware kann nun einfach auf die Tragwand 2 aufgelegt werden. Nun werden die Schwenkbügel 20, 21 an Betätigungsgriffen 29, die an diesen angeformt sind, ergriffen und die Vorratsrolle 19 wird um die Schwenkachse 22 aus der Offenstellung über die in der Fig. 4 gezeigten Stellung in eine Schließstellung verbracht, in der die Kupplung 26 in der Sperrstellung vorliegt. Hierbei rollt sich die flexible Waren-Haltewand 8 von der Vorratsrolle 19 im benötigten Maß ab, wobei die Haltewand 8 aufgrund der Vorspannung der Federwelle und aufgrund der konvexen Formgebung der Tragwand 2 an der Ware anliegt und diese in der Tasche fixiert. Beim Einrasten in die Schließstellung überwinden die beiden Kupplungsstifte 28 eine Vorspannkraft der ihnen zugeordneten Sperrklinken 27. Auf der Vorratsrolle 19 bleibt in der Schließstellung der Überstand 8a der Haltewand 8 aufgerollt.

Zum Entladen der Transporttasche 18 werden die beiden Sperrklinken 27 entgegen ihrer Vorspannkraft in ihre jeweilige Freigabestellung verlagert, sodass die Sperrklinken 27 die Kupplungsstifte 28 freigeben. Unterstützt durch die Vorspannkraft der Federwelle der Vorratsrolle 19 schwenken die Bügel 20, 21 zurück in die Offenstellung, sodass die Ware aus der Tasche freigegeben wird.

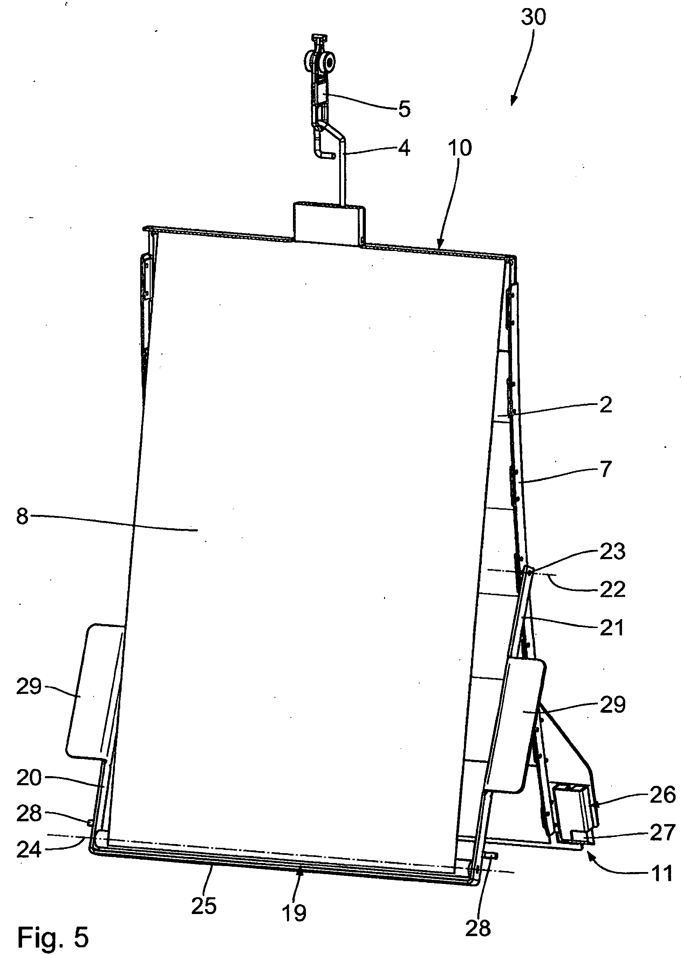

Anhand der Fig. 5 wird nachfolgend eine weitere Ausführung einer Transporttasche 30 beschrieben, die anstelle der Transporttaschen 1 und 18 zum hängenden Transport von Waren zum Einsatz kommen kann. Komponenten und Funktionen, die denjenigen entsprechen, die vorstehend unter Bezugnahme auf die Fig. 1 bis 3 und insbesondere unter Bezugnahme auf die Fig. 4 bereits erläutert wurden, tragen die gleichen Bezugsziffern und werden nicht nochmals im Einzelnen diskutiert.

Im Unterschied zur Transporttasche 18 ist bei der Transporttasche 30 die Kupplung 26 im unteren Wand-Verbindungsabschnitt 11 angeordnet. In der Offenstellung der Transporttasche 30 liegt die Vorratsrolle 19, gehalten über die Federkraft der Federwelle, im Bereich des oberen Wand-Verbindungsabschnitts 10. Zum Beladen der Transporttasche 30 wird diese wiederum so aufgelegt, dass die konvexe Seite der Tragwand 2 nach oben weist. Die Ware wird, wie vorstehend im Zusammenhang mit der Transporttasche 18 bereits beschrieben, auf die Tragwand aufgelegt und die Bügel 20, 21 werden aus der Offenstellung in die Schließstellung verbracht, wobei die Kupplungsstifte 28 mit den Sperrklinken 27 verrasten. Zum Entladen der Transporttasche werden die Sperrklinken 27 in die Freigabestellung überführt, sodass die Kupplung 26 die Kupplungsstifte 28 freigibt und die Bügel 20, 21, unterstützt durch die Vorspannung der Federwelle der Vorratsrolle 19 wieder zurück in die Offenstellung um die Schwenkachse 22 verschwenkt werden. Sobald das Öffnen der Kupplung 26 in der hängenden Transportstellung der Transporttasche 30 erfolgt, entlädt sich die Ware unter Schwerkrafteinfluss aus der Transporttasche 30.

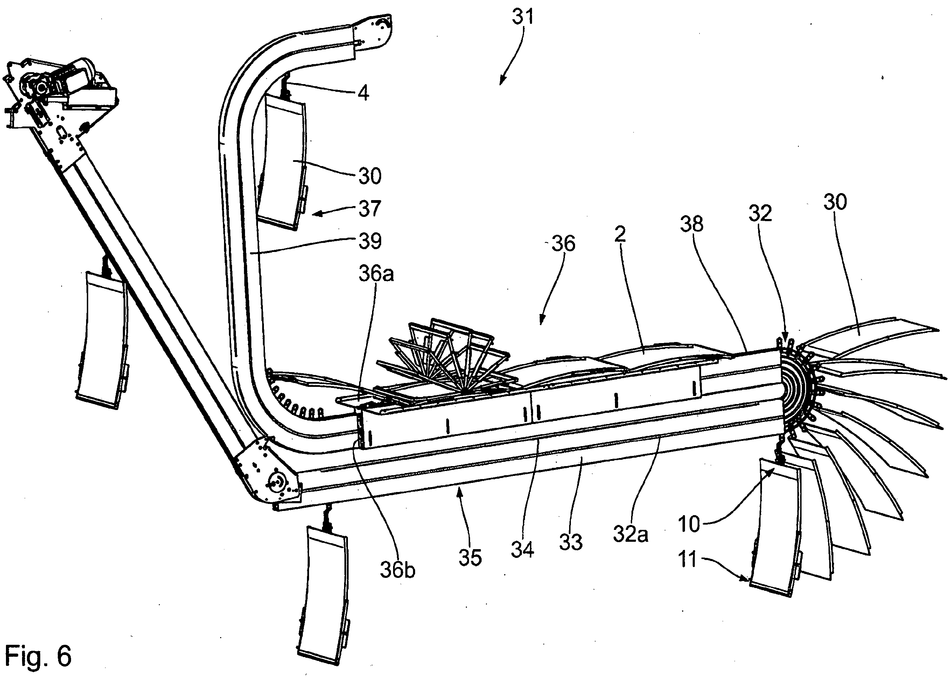

Fig. 6 zeigt perspektivisch eine Beladestation 31 für die Transporttaschen. 30. Die Beladestation hat ein Fördertrum 32 zum Fördern der Transporttaschen 30. Das Fördertrum 32 gibt eine Förderrichtung der Transporttaschen 30 vor. Das Fördertrum 32 umfasst eine Förderschiene 33, in der eine angetriebene Förderkette 34 geführt ist. Das Fördertrum 32 der Beladestation 31 fördert die Transporttaschen 30 durch mehrere Stationsabschnitte, nämlich einen Zuführabschnitt 35, einen Beladeabschnitt 36 und einen Abführabschnitt 37. Längs dem Zuführabschnitt 35 werden die unbeladenen Transporttaschen 30 relativ zu einem Abschnitt 32a des Fördertrums 32 hängend zugeführt. Die unbeladenen Transporttaschen 30 hängen in Folge des Eigengewichts senkrecht nach unten. Das bedeutet, dass die Tragwand 2 und die Haltewand 8 quer zur Förderrichtung orientiert sind. Längs des Zuführabschnitts 35 ist die Förderrichtung der Transpörttaschen 30 horizontal orientiert. Das bedeutet, dass die Tragwand 2 und die Haltewand 8 jeweils senkrecht zur Förderrichtung orientiert sind. Im Beladeabschnitt 36 werden die Transporttaschen 30 auf einem weiteren Abschnitt 38 des Fördertrums liegend gefördert. Bei der liegenden Förderung sind die Tragwand 2 und die Haltewand 8 im Wesentlichen parallel zu der horizontalen Förderrichtung orientiert. Die Transporttasche 30 liegt mit der Tragwand 2 auf dem Fördertrum 32 des Beladeabschnitts 36 auf. Die Förderrichtung kann längs des Beladeabschnitts36 auch gegenüber der Horizontalen geneigt sein. Während der liegenden Förderung der Transporttaschen 30 befinden sich die Transporttaschen 30 in einer räumlich definierten Position. Gemäß dem gezeigten Ausführungsbeispiel liegt die Transporttasche an mindestens drei Punkten im Beladeabschnitt 36 des Fördertrums 32 auf.

Ein Schwenken der Transporttasche 30 mit dem Tragelement 4 an dem Rollenadapter 5 ist verhindert. Es ist auch denkbar, dass die Transporttasche 30 beispielsweise durch eine Arretierung der Tragelemente 4 in einer gewünschten Liegeposition arretiert gefördert werden kann.

Längs dem Abführabschnitt 37 der Beladestation 31 werden die beladenen Transporttaschen 30 relativ zu einem weiteren Abschnitt 39 des Fördertrums hängend abgeführt.

Zwischen dem Zuführabschnitt 35 und dem Beladeabschnitt 36 wird das Fördertrum 32 um 180° umgelenkt, sodass die Tragelemente 4 der Transporttaschen, die im Zuführabschnitt 35 unter dem Fördertrum 32 angeordnet waren, nun auf dem Fördertrum 32 zu liegen kommen. Im Abführabschnitt 37 erfolgt wiederum eine 180°-Umlenkung des Fördertrums, sodass die Tragelemente 4 der Transporttaschen 30 wieder unterhalb des Fördertrums 32 angeordnet sind.

Der Beladeabschnitt 36 ist als Beladetisch 36a ausgeführt, der eine Längsnut 36b zum Durchtritt der Tragelemente hin zum Fördertrum 2 aufweist.

Die Transporttaschen 30 werden dem Beladeabschnitt 36 geöffnet zugeführt, also mit auf den jeweiligen Vorratsrollen 19 aufgerollter Haltewand 8. Im Beladeabschnitt 36 liegen die Transporttaschen 30 dann beladefertig mit der konvexen Seite der Tragwand 2 nach oben. Nach dem Beladen werden die Transporttaschen 30 durch Überführung der Schwenkbügel 20, 21 in die Schließstellung geschlossen. Dies kann manuell oder über entsprechende Betätigungselemente auch automatisch in dem Beladeabschnitt 36 der Beladestation 31 erfolgen. Nach dem Schließen der Transporttaschen 30 im Beladeabschnitt 36 werden die verschlossenen Transporttaschen 30 über den Abführabschnitt 37 aus der Beladestation 31 abgeführt.

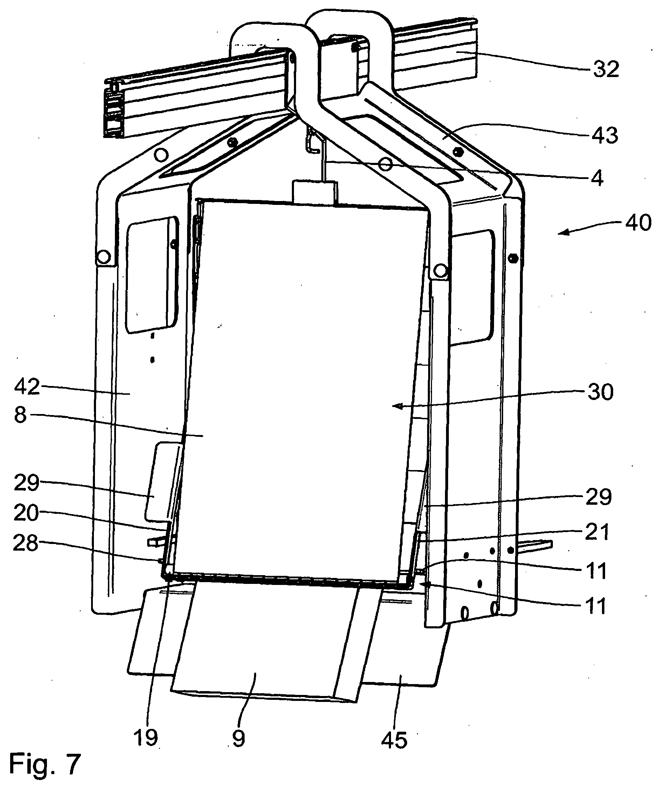

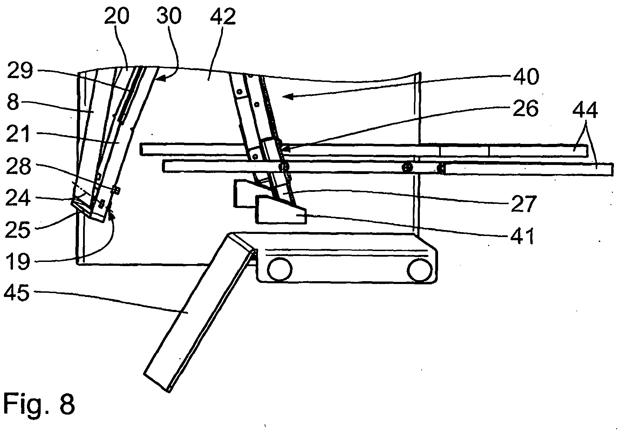

Anhand der Fig. 7 und 8 wird eine Entladestation 40 als weitere Komponente einer Förderanlage für die Transporttaschen 30 beschrieben. Komponenten und Funktionen, die vorstehend unter Bezugnahme auf die Fig. 1 bis 6 bereits erläutert wurden, tragen die gleichen Bezugsziffern und werden nicht nochmals im Einzelnen diskutiert.

Die Entladestation 40 hat Freigabemittel in Form von Schaltkufen oder, wie in der Fig. 8 dargestellt, Schaltkeilen 41, die von Seitenwänden 42 getragen werden, die wiederum über Tragbügel 43 am Fördertrum festgelegt sind. Die Schaltkeile 41 wirken mit den Sperrklinken 27 zum Öffnen der Kupplungen 26 zusammen. Beim Fördern der Transporttaschen 30 durch die Entladestation 40 laufen Sperrklinken 27 auf die Schaltkeile 41 auf und werden hierüber in die Freigabestellung verlagert. Hierdurch kommen die Kupplungsstifte 28 frei und die Transporttasche 30 öffnet sich zum Abgeben der Ware (Paket 9).

Um sicherzustellen, dass die Sperrklinken 27 in gewünschter Weise von den Schaltkeilen 41 betätigt werden, ist eine Bewegung der jeweiligen Transporttasche 30 in der Entladestation 20 im Bereich der Schaltkeile 41 über zwei Führungsschienen 44 geführt, die beiderseits eines Förderweges der Transporttasche 30 durch die Entladestation 40 jeweils innen an den Seitenwänden 42 angebracht sind.

Eine Führungsplatte 45 dient zur Führung einer Fallrichtung der aus der jeweiligen Transporttasche 30 abgegebenen Ware (Paket 9).

Die Beladestation 31 nach Fig. 6 und die Entladestation 40 nach den Fig. 7 und 8 kann mit geringfügigen Modifikationen genauso für die Transporttaschen 1 und/oder 18 eingesetzt werden.

## Patentansprüche

1. Beladestation (31) mit Transporttaschen (1; 18; 30) zum hängenden Transport von Waren
- wobei die Transporttaschen (1; 18; 30) jeweils aufweisen:
i) eine erste Taschenwand (2), die in ihrem in Transportstellung oberen Abschnitt (3) mit einem Tragelement (4) zum hängenden Tragen der Transporttasche (1; 18; 30) verbunden ist,
ii) mit einer zweiten Taschenwand (8), die mit der ersten Taschenwand (2) eine zumindest in der hängenden Transportstellung der Transporttasche (1; 18; 30) nach unten und zu zwei gegenüberliegenden Seiten hin geschlossene Tasche bildet,
iii) eine Kupplung (13; 26) zum lösbaren Verbinden der beiden Taschenwände (2, 8) in einem in der hängenden Transportstellung der Transporttasche (1; 18; 30) oberen Wand-Verbindungsabschnitt (10) und/oder in einem in der Transportstellung der Transporttasche (1; 18; 30) unteren Wand-Verbindungsabschnitt (11),
- mit mindestens einem Fördertrum (32) zum Fördern der Transporttaschen (1; 18; 30) und mit folgenden Stationsabschnitten:
i) einem Zuführabschnitt (35), längs dem die unbeladenen Transporttaschen (1; 18; 30) relativ zu einem Abschnitt des Fördertrums (32) hängend zugeführt werden,
ii) einem Beladeabschnitt (36),
iii) einem Abführabschnitt (37), längs dem die beladenen Transporttaschen (1; 18; 30) relativ zu einem weiteren Abschnitt (39) des Fördertrums (32) hängend abgeführt werden, **dadurch gekennzeichnet, dass** längs dem Beladeabschnitt (36) die Transporttaschen (1; 18; 30) auf einem weiteren Abschnitt (38) des Fördertrums (32) liegend gefördert werden.

2. Beladestation nach Anspruch 1, **dadurch gekennzeichnet, dass** der Beladeabschnitt (36) einen Beladetisch (36a) zur liegenden Auflage der Transporttaschen (1; 18; 30) aufweist.

3. Beladestation nach Anspruch 2, **dadurch gekennzeichnet, dass** der Beladetisch (36a) eine Durchgangsöffnung zum Durchtritt des Tragelements der jeweiligen Transporttaschen (1; 18; 30) hin zum Fördertrum (32) aufweist.

4. Beladestation nach einem der Ansprüche 1 bis 3, **gekennzeichnet durch** Mittel zum automatischen Öffnen der Transporttaschen (1; 18; 30) beim Eintritt in den Beladeabschnitt (36).

5. Beladestation nach einem der Ansprüche 1 bis 4, **gekennzeichnet durch** Mittel zum automatischen Schließen der Transporttaschen (1; 18; 30) beim Austritt aus dem Beladeabschnitt (36).

6. Förderanlage
- mit mindestens einer Beladestation nach einem der Ansprüche 1 bis 5,
- mit mindestens einer Entladestation (40) zum Entladen der Waren (9) aus den Transporttaschen (1; 18; 30).

## Claims

1. Loading station (31) with transport bags (1; 18; 30) for transporting goods in a hanging manner,
- wherein each of the transport bags (1; 18; 30) comprises:
i) a first bag wall (2), wherein a portion (3) of which facing upwards when in the transport position is connected to a carrying member (4) for transporting the transport bag (1; 8; 30) in a hanging manner;
ii) a second bag wall (8) which, together with the first bag wall (2), forms a bag which is closed downwards and towards two opposite sides at least in the hanging transport position of the transport bag (1; 8; 30);
iii) a coupling (13; 26) for detachably connecting the two bag walls (2, 8) in a wall connecting portion (10) facing upwards in the hanging transport position of the transport bag (1; 8; 30) and/or in a wall connecting portion (11) facing downwards in a transport position of the transport bag (1; 8; 30),
- comprising at least one conveyor run (32) for conveying the transport bags (1; 8; 30) and comprising the following station sections:
i) an inlet section (35) along which the unloaded transport bags (1; 18; 30) are supplied in hanging manner relative to a section of the conveyor run (32);
ii) a loading section (36);
iii) a discharge section (37) along which the loaded transport bags (1; 8; 30) are discharged in a hanging manner relative to another section (39) of the conveyor run (32),
**characterized in that** along the loading section (36) the transport bags (1; 8; 30) are conveyed horizontally to another section (38) of the conveyor run (32).

2. Loading station according to claim 1, **characterized in that** the loading section (36) is provided with a loading table (36a) for the transport bags (1; 8; 30) to be placed thereon horizontally.

3. Loading station according to claim 2, **characterized in that** the loading table (36a) is provided with a through-opening allowing the carrying member of the respective transport bag (1; 18; 30) to pass through to the conveyor run (32).

4. Loading station according to one of claims 1 to 3, **characterized by** means for automatically opening the transport bags (1; 18; 30) when entering the loading section (36).

5. Loading station according to one of claims 1 to 4, **characterized by** means for automatically closing the transport bags (1; 18; 30) when exiting the loading section (36).

6. Conveyor system comprising
- at least one loading station (31) according to one of claims 1 to 5;
- at least one unloading station (40) for unloading the products (9) from the transport bags (1; 8; 30).

## Revendications

1. Station de chargement (31) avec des sacs de transport (1 ; 18 ; 30) pour le transport suspendu de marchandises,
- où les sacs de transport (1 ; 18 ; 30) présentent chacun :
i) une première paroi de sac (2), laquelle est dans sa partie supérieure (3) en position de transport raccordée à un élément de support (4) pour la suspension du sac de transport (1 ; 18 ; 30),
ii) une deuxième paroi de sac (8), laquelle forme avec la première paroi de sac (2) un sac fermé sur le bas et sur deux côtés opposés au moins en position de transport en suspension du sac de transport (1 ; 18 ; 30),
iii) un accouplement (13 ; 26) pour le raccord amovible des deux parois de sac (2, 8) dans une partie de raccordement (10) de paroi supérieure en position de transport en suspension du sac de transport (1 ; 18 ; 30) et/ou dans une partie de raccordement (11) de paroi inférieure en position de transport du sac de transport (1 ; 18 ; 30),
- avec au moins une tour de transport (32) pour le convoyage des sacs de transport (1 ; 18 ; 30) et avec les segments de station suivants:
i) un segment d'amenée (35), le long duquel les sacs de transport (1 ; 18 ; 30) non chargés sont conduits en suspension vers une partie de la tour de transport (32),
ii) un segment de chargement (36),
iii) un segment d'évacuation (37), le long duquel les sacs de transport (1 ; 18 ; 30) chargés sont évacués en suspension vers une autre partie (39) de la voie de transport (32),
**caractérisée en ce que** le long du segment de chargement (36), les sacs de transport (1 ; 18 ; 30) sont transportés couchés sur une autre partie (38) de la voie de transport (32).

2. Station de chargement selon la revendication 1, **caractérisée en ce que** le segment de chargement (36) présente une table de chargement (36a) pour le support horizontal des sacs de transport (1 ; 18 ; 30).

3. Station de chargement selon la revendication 2, **caractérisée en ce que** la table de chargement (36a) présente une ouverte de passage, pour le passage de l'élément de support de chaque sac de transport (1 ; 18 ; 30) vers la voie de transport (32).

4. Station de chargement selon l'une des revendications 1 à 3, **caractérisée par** un moyen d'ouverture automatique des sacs de transport (1 ; 18 ; 30) à l'entrée dans le segment de chargement (36).

5. Station de chargement selon l'une des revendications 1 à 4, **caractérisée par** un moyen de fermeture automatique des sacs de transport (1 ; 18 ; 30) à la sortie du segment de chargement (36).

6. Installation de transport
- avec au moins une station de chargement selon l'une des revendications 1 à 5,
- avec au moins une station de déchargement (40) pour décharger les marchandises (9) des sacs de transport (1 ; 18 ; 30).
